Europäisches Patentamt

European Patent Office

Office européen des brevets

(11) Veröffentlichungsnummer : **0 030 932**
**B1**

# EUROPÄISCHE PATENTSCHRIFT

(45) Veröffentlichungstag der Patentschrift :
25.07.84

(51) Int. Cl.³ : **F 27 B   3/08, C 22 B   9/22,
C 21 B  13/12, H 05 B   7/00**

(21) Anmeldenummer : 80890142.5

(22) Anmeldetag : 02.12.80

(54) **Verfahren zum Plasma-Schmelzen von Metallen und Legierungen.**

(30) Priorität : 14.12.79 DD 217691

(43) Veröffentlichungstag der Anmeldung :
24.06.81 Patentblatt 81/25

(45) Bekanntmachung des Hinweises auf die Patenterteilung : 25.07.84 Patentblatt 84/30

(84) Benannte Vertragsstaaten :
**AT BE CH DE FR GB IT LI SE**

(56) Entgegenhaltungen :
DE-B- 2 710 377
DE-C-   466 102
FR-A- 1 275 221
GB-A-    20 371
US-A- 3 136 835
US-A- 3 422 206
US-A- 3 749 803
NEUE HÜTTE, 24. Jahrgang, Heft 10, Oktober 1979 J. LAMBRECHT et al. : « Beiträge der DDR zur Entwicklung neuer Stahlerzeugungsverfahren » Seiten 366-369
(73) Patentinhaber : **VEB Edelstahlwerk 8. Mai 1945 Freital
Hüttenstrasse 1
DDR-8210 Freital (DD)**

(72) Erfinder : **Esser, Fred, Dr.Ing.
DDR-7010 Leipzig
Wettiner Strasse 9 (DD)**
Erfinder : **Klöpper, Detlev, Dr.Ing.
DDR-7024 Leipzig
E.-Schubert-Strasse 20 (DD)**
Erfinder : **Scharf, Gerhard, Dr.Ing.
DDR-8027 Dresden
Lotzestrasse 4 (DD)**
Erfinder : **Lachner, Walter
DDR-8021 Schlüterstrasse 20
Dresden (DD)**

(74) Vertreter : **Puchberger, Rolf, Dipl. Ing.
Patentanwälte Dipl. Ing. Rolf Puchberger Dipl. Ing.
Georg Puchberger Singerstrasse 13
A-1010 Wien (AT)**

## Beschreibung

Die Erfindung betrifft ein Verfahren zum Schmelzen von Metallen und Legierungen mittels eines Plasmaschmelzofens, bei dem unabhängig von der Beschaffenheit des Einsatzgutes die Plasmabrenner kurz nach Schmelzbeginn mit voller Leistung arbeiten.

Es ist bekannt, Plasmabrenner mit übertragenem Niedertemperaturgasplasma für das Schmelzen von Metallen und Legierungen einzusetzen. Diese Plasmabrenner arbeiten meist in zylindrischen Ofengefäßen und sind vorzugsweise in Öffnungen in den Seitenwänden des Plasmaschmelzofens angeordnet. Da die von einer Plasmafackel abgegebene Energie mit der Länge der Plasmafackel zunimmt, wird bei den bekannten technischen Lösungen der Schrott so in den Ofen eingebracht, daß der Brenner oberhalb der Schrottschüttung liegt und nicht vom Einsatzgut verdeckt wird. Das wird im allgemeinen nur durch Einsatzgut mit hoher Schüttdichte, dem sogenannten Grobschott erreicht. Beim Einschmelzen von Schrott mit niedriger Schüttdichte, dem sogenannten Leichtschrott, muß beim Beschicken fast das gesamte Volumen des Ofengefäßes mit Leichschvott gefüllt werden, um nach dem Niederschmelzen eine ausreichende Menge von flüssigem Metall zu erhalten. Durch diese hohe Füllung können die Plasmabrenner, falls ihr Betreiben überhaupt technisch sicher möglich ist, nur mit stark verminderter Leistung arbeiten, bis der Schrott vor dem Plasmabrenner genügend ausgeschmolzen ist. Die Ursache für das Betreiben mit verminderter Leistung liegt in der physikalischen Natur des übertragenen Plasmabogens. Bei einem gegebenen Bogenstrom ist die Bogenspannung und damit die umgesetzte Energie eine Funktion der Länge des Plasmafackel. Kann sich die Plasmafackel durch festes Material, das ihre Länge begrenzt, nicht voll ausbilden, wird dadurch auch die übertragene Energie beschränkt. Erst nach dem die Plasmafackel einen ausreichend großen Krater erschmolzen hat, kann sie mit der optimalen Leistung arbeiten.

Es ist außerdem bekannt, die Einschmelzleistung von Lichtbogenöfen durch Verwendung von zusätzlichen Brennern für flüssige oder gasförmige Brennstoffe zu erhöhen. Die praktische Erfahrung hat gezeigt, daß diese zusätzlichen Brenner völlig unabhängig von der Lage des Einsatzgutes und dem Grad der Bedeckung der Brenner zünden und sich mit maximaler Brennerleistung betreiben lassen. Das hat jedoch den Nachteil, daß diese Zusatzbrenner einen bedeutenden Anteil der zum Einschmelzen benötigten Energie liefern, so daß der Vorteil von Lichtbogenöfen, die Unabhängigkeit von flüssigen oder gasförmigen Brennstoffen, im starken Maße verloren geht.

Aus der DE-C-466 102 ist bereits ein Lichtbogenofen bekannt, bei dem benachbart zu jeder Elektrode ein Brenner angeordnet ist, wobei Brennerflamme und Elektrode miteinander einen Winkel bilden. Es wird hier zuerst der Gasbrenner entzündet und später erst die Elektrode in Betrieb genommen.

Es ist Ziel der Erfindung, ein Verfahren für einen Plasmaschmelzofen zu entwickeln, mit dem es möglich ist, unabhängig von der Beschaffenheit des Einsatzgutes bereits kurz nach Schmelzbeginn die Plasmabrenner mit voller Leistung arbeiten zu lassen.

Die erfindungsgemäße Aufgabe wird durch die im Anspruch erwähnten Merkmale gelöst.

Die sofort mit voller Leistung arbeitenden Starthilfsbrenner schmelzen jeweils einen Krater in das Einsatzgut, wobei mit sinkender Schüttdichte des Einsatzgutes infolge der geringeren benötigten Wärmemenge das Aufschmelzen schneller erfolgt. Hat der ausgeschmolzene Krater eine ausreichende Größe, so daß der Plasmabrenner technisch sicher betrieben werden kann, wird der Plasmabrenner gezündet. Die Starthilfsbrenner werden spätestens dann abgeschaltet, wenn die Kraterbildung abgeschlossen ist, das Rauchgas an das geschüttete Einsatzgut keine fühlbare Wärme überträgt und die Abgastemperaturen deutlich ansteigen.

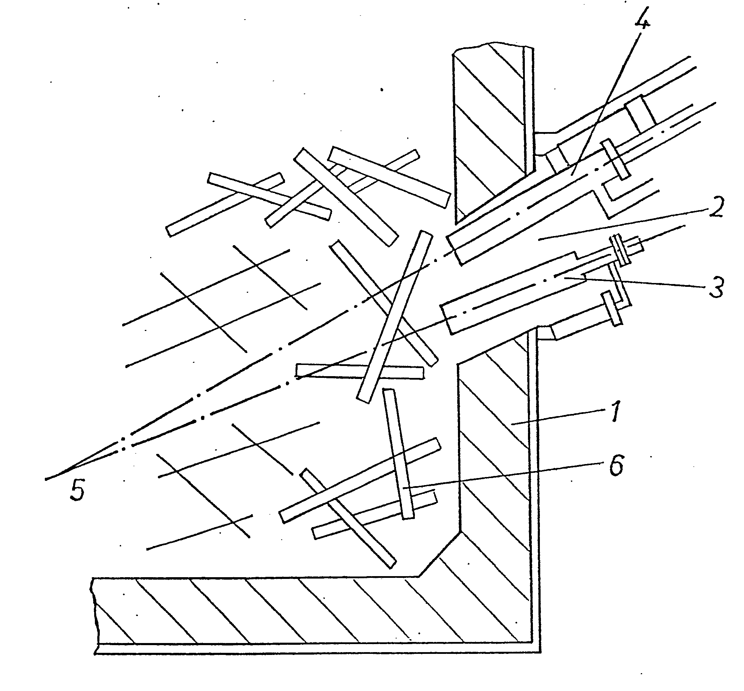

Die Erfindung soll nachfolgend an einem Ausführungsbeispiel unter Bezugnahme auf die beigefügte schematische Darstellung näher beschrieben werden. Die Abbildung ist ein Querschnitt durch den Plasmaschmelzofen an einer Durchführung 2 in der Seitenwand 1. Die anderen Durchführungen sind vollkommen analog zur Durchführung 2. In der Durchführung 2 befindet sich ein üblicher Plasmabrenner 3 in bekannter Anordnung. Über diesem Plasmabrenner 3 ist ein Starthifsbrenner 4 angebracht, der mit flüssigem oder gasförmigem Brennstoff betrieben wird. Die Längsachsen des Plasmabrenners 3 und des Starthilfsbrenners 4 schneiden sich im Schnittpunkt 5. Nach dem Chargieren ist der Plasmaschmelzofen mit Leichtschrott 6 gefüllt. Danach wird der Starthilfsbrenner 4 in Betrieb gesetzt. Nachdem durch die Wirkung des Starthilfsbrenners 4 ein ausreichend großer Krater gebildet ist, so daß der Plasmabrenner 3 sicher gezündet werden kann, geht dieser in Betrieb. Der Starthilfsbrenner 4 wird abgeschaltet, wenn der Plasmabrenner 3 mit voller Leistung gefahren wird und die Abgastemperatur als Meßsignal einen bestimmten Wert erreicht hat. Danach arbeitet der Plasmaschmelzofen auf die bekannte Art.

## Anspruch

Verfahren zum Schmelzen von Metallen und Legierungen mittels eines Plasmaschmelzofens, bei dem unabhängig von der Beschaffenheit des Einsatzgutes (6) die Plasmabrenner (3) kurz nach Schmelzbeginn mit voller Leistung arbeiten, dadurch gekennzeichnet, daß durch mindestens einen im spitzen Winkel zur Achse des benachbarten Plasmabrenners (3) in der gleichen Ofenwandöffnung angeordneten, sofort mit voller Leistung arbeitenden, mit flüssigem oder gasförmigem Brennstoff betriebenen Starthilfsbrenner (4) ein Krater in das Einsatzgut nahe dem Plasmabrenner (3) geschmolzen wird und daß nach Erreichen einer für die Plasmafackel ausreichenden Aufschmelzung die Plasmabrenner (3) gezündet und die Starthilfsbrenner (4) abgeschaltet werden.

## Claim

Process for melting metals and alloys by means of a plasma-melting furnace where, independent from the nature of the charging material (6), the plasma burners (3) operate with fullpower shortly after the melting started, characterized in that a crater is molten in the charging material adjacent the plasma burners (3), by at least one auxiliary burner for starting being arranged in an acute angle to the axis of the adjacent plasma burner (3) in the same aperture of the furnace wall, operating immediately with full power and being fed with liquid or gaseous fuel, and that after gaining a fusing sufficient for plasma torch the plasma burner (3) is ignited and the auxiliary burner (4) for starting is switched off.

## Revendication

Procédé de fusion de métaux et alliages au moyen d'un four de fusion à plasma dans lequel, indépendamment de l'état de la matière utilisée (6), les brûleurs à plasma (3) fonctionnent à leur pleine puissance peu de temps après le début de la fusion, caractérisé en ce que l'on fait fondre un cratère dans la matière utilisée à proximité du brûleur à plasma (3), par au moins un brûleur auxiliaire de démarrage (4) disposé à un angle aigu par rapport à l'axe du brûleur à plasma voisin (3), dans la même ouverture de paroi du four, et fonctionnant immédiatement à la pleine puissance, alimenté en un combustible liquide ou gazeux, et en ce que dès qu'une fusion suffisante pour le brûlage du plasma est atteinte, le brûleur à plasma (3) est allumé et le brûleur auxiliaire de démarrage (4) est arrêté.